# EUROPEAN PATENT SPECIFICATION

(11) **EP 2 496 527 B1**
(45) Date of publication and mention of the grant of the patent: **17.04.2019**
(21) Application number: 10798853.7
(22) Date of filing: 26.10.2010
(51) Int. Cl.: C02F 1/78, C02F 3/00

(54) **WASTE SLUDGE DIGESTION PROCESS BY SEQUENTIAL INTERMITTENT OZONE DOSING**
KLÄRSCHLAMMFAULUNGSVERFAHREN DURCH SEQUENZIELLE INTERMITTIERENDE OZONDOSIERUNG
PROCÉDÉ DE DIGESTION DE BOUES EXCÉDENTAIRES PAR DOSAGE SÉQUENTIEL INTERMITTENT D'OZONE

(30) Priority: 04.11.2009 TR 200908245
(43) Date of publication of application: 12.09.2012
(73) Proprietor: Gokcay, Celal Ferdi, 06531 Ankara (TR)
(72) Inventor: Gokcay, Celal Ferdi, 06531 Ankara (TR)
(74) Representative: Inal, Aysegul Seda
(86) International application number: PCT/TR2010/000213
(87) International publication number: WO 2011/056159

(56) References cited:
- US-A1- 2007 119 763

## Description

### Field of Invention

This invention is a sludge digestion process, where sequential ozone is applied to the standard aerobic biological sludge digestion process, which is used for reducing the amounts of by-product waste sludge produced in treatment plants, thereby stabilizing the sludge in a shorter period and at a lower cost, as compared to the standard process.

### State of the Art

Sludge is produced in wastewater treatment plants during operation as a by-product. The elimination of produced sludge poses one of the most challenging technical problems faced in treatment plants regarding the application difficulties and processing periods.

During elimination of the waste sludge, both biological stabilization and reduction in volume are necessary. According to the state of the art of the technique, stabilization of the waste sludge and its volume reduction is possible by biological, chemical and thermal processes.

According to the state of the art of the technique, sludge is generally subjected to biological anaerobic and aerobic digestion, followed by dewatering. Long periods, such as around 15-30 days, are required for the stabilization of the sludge in aerobic and anaerobic digesters. This, has not yet been surpassed in the present state of the art of the technique and the continuously produced sludge has become a major disadvantage. In the case of phosphorus treating advanced treatment plants, the anaerobic digestion, owing to the fact that it will cause release back of the biologically absorbed phosphorus, cannot be used; such plants should wholly rely on aerobic processes. Solving this technical problem, which is causing elevation of the treatment plant installation costs to very high levels; and treatment plants being vital for the protection of the natural environment, the solution has not yet been achieved to the desired state by the techniques developed until this day.

Besides, as the regulations getting tighter on storage and use of waste sludge, the focus of attention is diverted to sludge volume reduction. At this point, ozone being a strong oxidant, stood out for both treatment and volume reduction of the sludge.

Digestion with ozone takes place by two mechanisms; first is disruption of bacterial cell walls, second is the mineralization of the intracellular contents. The points that make ozone process superior over other decomposition processes are its suitable cost and high decomposition capacity. For this reason treatment of sludge by ozone is getting popular throughout the world.

In the state of the art of the technique many research have been undertaken on the digestion of sludge by ozone. In these researches the effects of continuous ozone application to different parts of the treatment plants, such as biological reactor, sludge supernatant, return activated sludge line and sludge treatment unit, for settlability, dewaterability, reduction in waste sludge amount, pH, nitrification and denitrification processes, microbial flock sizes of sludge and the water quality, have been investigated (Yasui and Shibata, 1994; Goel et.al., 2004; Böhler and Siegrist, 2004; Dytczak et.al., 2006; M.Weemeas et.al., 2000; Park et.al., 2002; Paul and Debellefontaine, 2007; Mines et.al., 2009; Song et.al., 2003).

In the state of the art of the technique, the common point in all these studies is the continuous ozonation of the samples. However, owing to the high price of ozone, this led to serious elevated installation and running costs.

Without losing in efficiency, the need to develop a process with more suitable costing have led to the development of a much more economical and efficient process than the continuous ozonation processes; this is the sequential intermittent ozonation process for waste sludge digestion, which is the subject of this invention.

### Brief Description of the Invention

With the sequential intermittent ozonation process, developed in this invention, it has been possible to digest and stabilize the waste sludge that is produced in large amounts in very short contact periods and in great quantities at a minimum of ozonation.

Thanks to the process developed in this invention, it is possible to eliminate the excess sludge, which is one of the great problems of wastewater treatment plants. Besides, serious shortening of the period necessary for the elimination of the waste sludge, brings a solution to the large capital investments and running costs.

In order to reach this target, a different approach has been made. In this approach, ozonation have been administered in sequentially intermittent manner considering the doubling time of the bacteria culture in the sludge digester. In this approach sludge was ozonated for 2, 3, 4 and 6 minute periods and was subsequently aerated for 24 h for the remaining active culture to consume the disintegrated biomass. During this time, while the bacteria culture consuming the released materials, more biomass is generated. The generated biomass is oxidized again by the next ozonation. This process is repeated sequentially for 4 or more times until the sludge is stabilized.

Moreover the produced digested sludge is bacteriologically sterile and rich in phosphorus hence may be valued as fertilizer and revenue may be generated from the digested sludge thereby reducing the running costs.

### Figure Captions Explaining the Invention

**Figure-1** Comparison graph of the COD values remaining in the supernatant
**Figure-2** Comparison of the COD values remaining in the supernatants after 6 minutes of ozonation, with those of the control group
**Figure-3** Comparison graph of the MLSS values in the 2, 3, 4 minute samples
**Figure-4** Effect of cumulative ozone doses on the MLSS.
**Figure-5** Comparison of the COD values remaining in the supernatants of 4 and 6 minutes ozonated samples
**Figure-6** Comparison of the MLSS values of 4 and 6 minutes ozonated samples.
**Figure-7** Comparison of the MLVSS values of 4 and 6 minutes ozonated samples.

### Detailed Description of the Invention

With the sequential intermittent ozonation of waste sludge digestion process, developed in this invention, the waste sludge, which is continuously produced in large quantities in wastewater treatment plants is stabilized by short period intermittent ozonation technique, employing minimum of ozone in very short periods and digesting large proportions.

In order to get the highest efficiency in the application of the process, which is the subject of this invention, two sets of experiments have been undertaken; the details of these experiments to determine the most efficient application of the process are explained below.

The age of the sludge used in these experiments was 2-4 days and MLSS (Mixed Liquor Suspended Solids) value was adjusted by diluting it to 2.3 g/L. The MLVSS (Mixed Liquor Volatile Suspended Solids) value of this sludge was set constant at 1.9 g/L.

In order to stop interference of the soluble COD (Chemical Oxygen Demand) present in the medium, the sludge was washed by centrifugation using pH 7 phosphate buffer solution (0.013M KH₂PO₄/K₂HPO₄), the supernatants of the washed sludge were discarded and pallets were diluted to 300 mL using buffer solution. This way it was aimed that soluble COD was only originating from the biomass. This procedure was also equally applied to the controls and parallel groups.

An ozone generator with operating pressure of 5 bars, gas flow rate 10-140 l/h, was used in the experiments. An air sparger was fitted to the end of the ozone discharge unit, in order to improve distribution of the ozone gas in sludge. The amount of ozone gas imparted into the liquid through time was measured according to the Standart Methods 8021 (DPD chlorine indicator) method by consulting a spectrophotometrically-drawn calibration curve (for 25 mL sample).

The analysis of the experiments were carried out by; Total Solids (TS-MLSS) Standard Methods (2540B) (APHA,1998); Chemical Oxygen Demand (COD) was determined by using Hach Lange kits according to HACH 8000 (US EPA approved) method; Volatile Suspended Solids (VSS-MLVSS) according to the EPA 2540 solids method. The total P was analyzed according to the EPA Method 365.4; ortho-P was analyzed according to the EPA 365.3 method. The dissolved ozone in water was analyzed according to the Standart Methods 8021 (DPD chlorine indicator).

In the first experiment set, digestion of the sludge was followed by observing MLSS, MLVSS values; and COD was measured in the filtrates after solids in the flasks were filtered off. In the second set, in addition to these, Oxygen Consumption Rates (OCR) were also measured. The ozone concentrations obtained in the 4 and 6 minutes test flasks are presented in Table 1. , and for g ozone/g biomass form values have been calculated by dividing the amount of ozone transferred, by the biomass present in each flask,.

**Table 1. Ozone Dose Corresponding to g Biomass**

| Ozonation Period | Ozone amount mg/L | g ozon / g biomass |
|---|---|---|
| 4 minutes | 3.2141 | 0,0017 |
| 6 minutes | 4.0363 | 0,0021 |

During the experiments, from 0^{th} day and on, TS and VS (Total Solids and Volatile Solids) were measured prior to ozonation and immediately after ozonation and only COD was measured in the filtrates. Later sludge were shaken for 24 h on an orbital shaker at 75 rev/min and incubated at 25 °C. Samples were ozonated for predetermined periods, at the same time of the day, and on each day for a duration of 4 days; the same analysis were carried out prior and after ozonation.

### 1^{st} Set Experiments

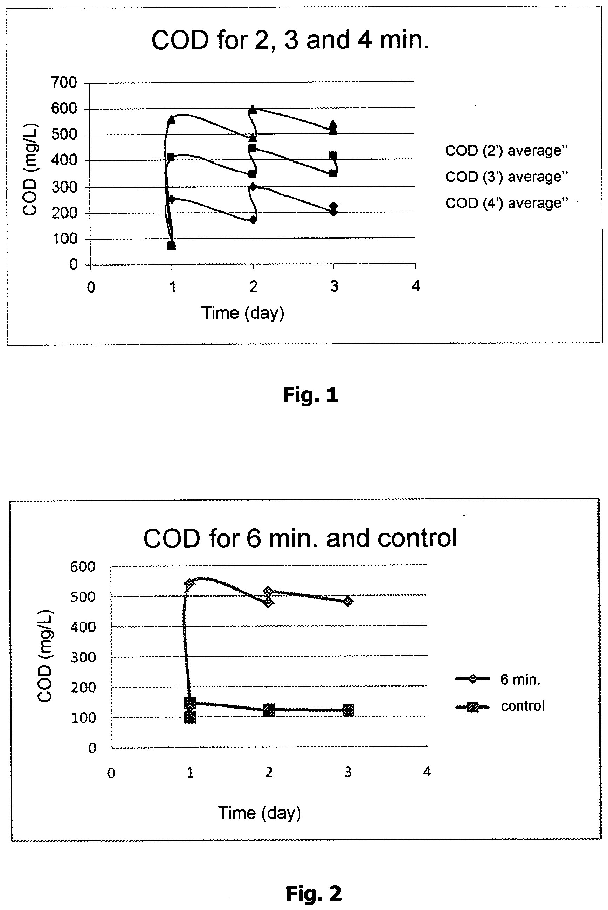

The obtained results after ozonating samples for 2, 3, 4 ve 6 minutes in the first experiment set are presented in Figure .1. At the end of these experiments, the inadequacy of 2 and 3 minutes ozonation was observed. In addition to this, it is understood from Figure 2, that no appreciable COD appeared in the aliquotes of samples following 6 minutes ozonation in the subsequent days. this suggested that ozonantion on the first day completely killed the biomass and accordingly with the loss of bacterial activity subsequent release of COD was almost zero. The numerical results obtained in the first set of experiments are presentred in Table 2.

**Table 2. Changes in MLSS and COD Values with the Ozonation Periods**

| Minute | MLSS start g/L | MLSS last g/L | % MLSS reduction | COD initial mg/L | COD last mg/L |
|---|---|---|---|---|---|
| 2 | 2,26 | 1,75 | 23 | 71 | 221,5 |
| 3 | 2,26 | 1,35 | 40 | 71 | 417 |
| 4 | 2,26 | 1,2 | 47 | 71 | 537 |

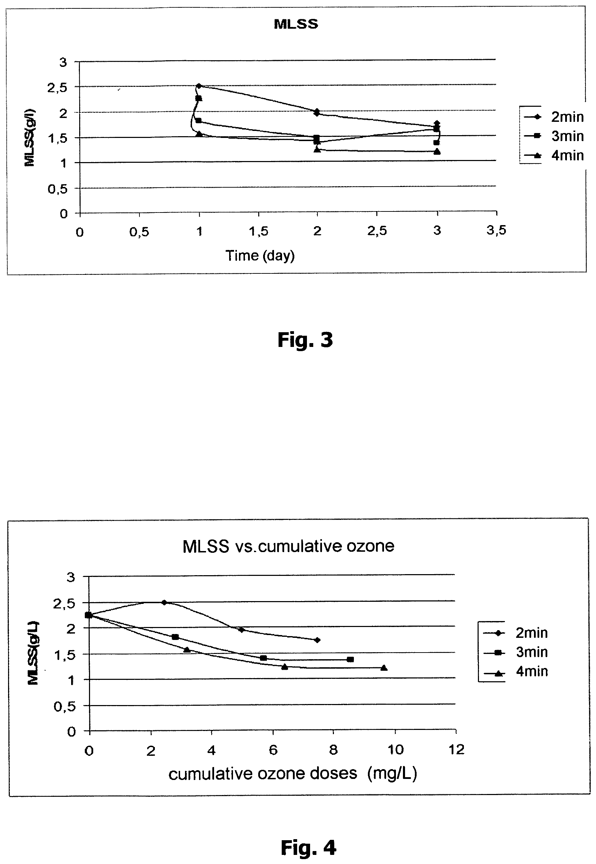

The results obtained from the First Set Experiments indicated that when ozone is imparted into the medium, cell walls are ruptured releasing cellular contents into the medium and increasing the soluble COD. It is observed that, later during subsequent 24 h of incubation, COD is consumed and removed from the medium by the existing biomass; in subsequent ozonations COD was again released. From Figure 3, where MLSS readings are presented, it is seen that MLSS drop was directly proportional to the applied ozone in flasks receiving 2, 3 and 4 minutes ozonation. The remaining biomass after ozonation consumes the released COD during the shaking period. As the amount of remaining biomass decreases in the medium with time, the consumed COD by the biomass also decreases and after each ozonation progressively less COD is released into the filtrate. In 6 minute application the released COD due to biomass disintegration was too large, however no such large amount of release could later be observed. This behavior suggests two possibilities. Either first day ozonation completely disintegrated the biomass and caused COD release into the filtrate, for this reason later ozone applications did not cause further release; or high ozone dose completely killed the biomass thus hindering later COD uptake.

The total doses applied at the end of the fourth day in 2, 3 and 4 minutes applications, and the MLSS decrements obtained, are presented in Figure 4. It is seen here that in 4 minute application MLSS decrement stopped when total ozone applied was 6 mg/l. This corresponds to 2.65 g ozone/g total biomass removed.

### 2^{nd} Set Experiments

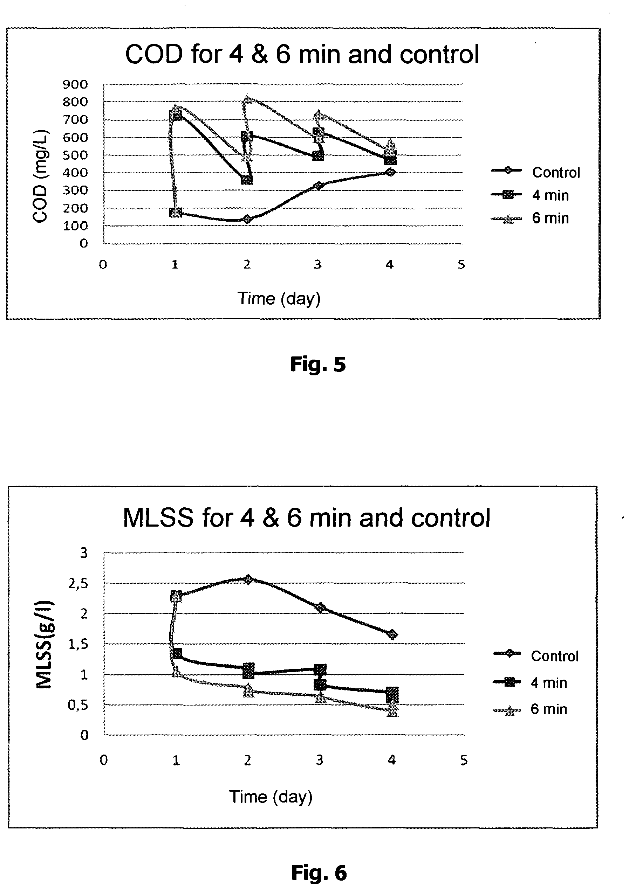

These experiments were undertaken to confirm the first set experiments and to complete the missing data in 4 and 5 minutes applications. As can be seen from Figure 5, there was no significant difference on the 1^{st} day in COD release in 4 and 6 minute applications. Yet, it was observed that COD release increased with time in 6 minute application. This situation indicates that 6 minutes application destroyed the live biomass even more. Due to more active biomass remaining in 4 minutes application, more COD consumption was observed during aeration.

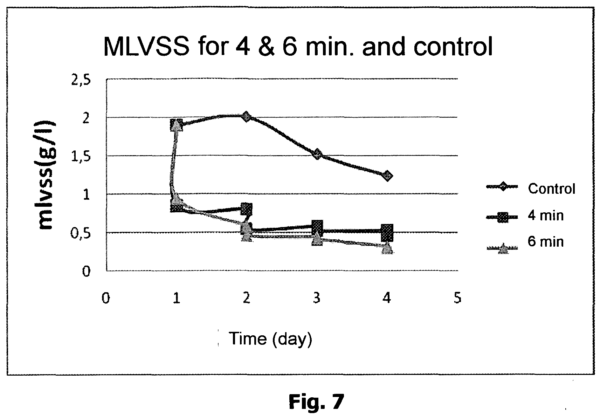

This behavior is understood from the MLVSS readings shown in Figure 7. In the case of 4 minutes application MLVSS decrement stopped at the end of the 3^{rd} day while it was still continuing in the 6 minutes application. The MLSS behavior presented in Figure 6 also confirm this observation. Although there was no change in MLSS at the end of 3^{rd} day in 4 minutes application, MLSS decrement was still continuing in the 6 minutes application.

### Oxygen Consumption Rate (OCR)

The stabilization status of the remaining biomass after 4 and 6 minutes applications was evaluated by looking at the OCR data. These data are presented in Table 3. As can be seen from this table, the oxygen consumption rate for all the flasks was decreasing along the duration of the experiment. The OCR in the test flasks progressed at a much slower pace than the control flask. Particularly in 6 minutes flask, owing to the fact that almost no biomass was remaining in this flask at the end of the experiment, maximum drop was observed here. In order to determine whether released COD in this flask is biologically decomposable, a biomass seed, whose oxygen uptake rate was known, was added to the supernatant of the sample which experienced 6 minutes ozonation on each of 4 days and OCR was measures. Because dO/dt value of the seed was -0.0004 mg/h and dO/dt of the sample with added seed was -0.0006, it was concluded that the COD released in the 6 minute application is biodegradable.

**Table 3. Daily Oxygen Consumption Rates (OCR) of 4, 6 minutes Applications and of the Control Group**

| **OCR (dO/dt) (mgO2/h)** | **Control** | **4 minutes** | **6 minutes** |
|---|---|---|---|
| **1^{st} day** | -0,0008 | -0,0008 | -0,0008 |
| **2^{nd} day** | -0,0006 | -0,0008 | -0,0003 |
| **3^{rd} day** | -0,0005 | -0,0003 | -2*10⁻⁵ |
| **4^{th} day** | -0,0004 | -0,0002 | -5*10⁻⁵ |

### RESULTS

The aerobic digestion is a sludge elimination technique which is particularly applicable to phosphorus treating processes. Such sludge should not be exposed to anaerobiosis so that absorbed phosphorus will not be released back. As a result of the experiments, it was concluded that in the case where a phosphorus rich sludge is obtained, this may be used for secondary purposes. Considering that not only COD but phosphorus may also be released into the medium at the end of experiments, total phosphorus and ortho-phosphorus in the 6 minutes ozonated sample were analyzed at the end of the experiments. The total phosphorus in the sludge was recorded as 11,36 mg/L in the first day; after ozonation orthophosphate was measured as 3.6 mg/L. Initially 0.006 g phosphorus was present in each gram of biomass, later this figure increased to 0.0082. From this it is understood that during ozonation experiments subtantial amounts of phosphorus is not released into the medium.

It is known that one important purpose of the sludge treatment is to disinfect the sludge. To have an idea on this, *E. coli* bacteria counts have been made in the sludge. Initially 800 E. coli colonies/100 mL was recorded in the liquid obtained after homogenization of the sludge in water, however no colonies could be recorded after ozonation.

As a result of the experiments, both stabilization and digestion of the undigested sludge could be achieved in as short a period as 4 days by the intermittent ozonation technique. Along with this, it was understood that the produced sludge is disinfected with respect to coli bacilli and enriched in phosphorus. Moreover, with the experiments it was shown that the COD released into the medium is biologically degradable and may be recirculated back into the system.

Based on the experimental results obtained, it is seen that in the initial 3 days, the 4 and 6 minutes ozonations produced similar results for MLSS, MLVSS and COD. However, due to more effectiveness of the 6 minutes ozonantion in stabilization, it was concluded **that 4 minutes ozonation in the initial 3 days followed by 6 minutes ozonation on the 4th day should be more efficient.** According to literature values the hydraulic retention time of the waste sludge in aerobic digestion is 10-15 days (20 °C) (Metcalf Eddy 1991). At the end of this period expected reduction in MLVSS is around 40-50 %. With the sequential intermittent ozone dosing process, developed with this invention, the MLVSS was reduced by 84 % (for 6 minutes ozonation) and the required contact period was determined as 4 days.

### REFERENCES

- Liu,Y., (2003) chemically reduced excess sludge production in the activated sludge process, Chemosphere 50(1), 1-7.
- Song, K., Choung, Y., Ahn, K., Cho, J., Yun, H. (2003) Performance of membrane bioreactor system with sludge ozonation process for minimization of excess sludge production, Desalination 157, 353-359.
- Saby, S., Djafer, M., Chen G., (2002), Feasibility of using a chlorination step to reduce excess sludge in activated sludge process, Water Res., 36, 656-666.
- Zhang, G., Yang, J., Liu, H., Zhang, J., (2009), Sludge ozonation: Disintegration, supernatant changes and mechanisms, Bioresource Technology, 100, 1505-1509.
- Egemen, E., Corpening, J., Nirmalakhandan, N., (2001), Evaluation of an ozonation system for reduced waste sludge generation, Water Science and Technology, 44(2-3), 445-452.
- Park, K.Y., Ahn, K-H., Maeng,S.K., Hwang, J.H., Kwon, J.H., (2002), Feasibility of sludge ozonation for stabilization and conditioning, Ozone Science and Engineering, 25, 73-80.
- Albuquerque,J.S., Domingos, J.C., Sant'Anna Jr.,G.L., Dezotti, M., (2008), Application of ozonation to reduce biological sludge production in an industrial wastewater treatment plant, Water Science and Technology, 58.10, 1971-1976.
- Müller,J., (2002), Disintegration as a key step in sewage sludge treatment, Water Science and Technology, 41(8), 123-130.
- Yasui, H., Shibata, M., (1994), An innovative approach to reduce excess sludge production in the activated sludge process, Water Science and Technology, 30(9), 395-404.
- Goel, R., Takutomi, R., Yasui, H., (2003), Anaerobic digestion of excess activated sludge with ozone pretreatment, Water Science and Technology, 47(12), 207-214.
- Böhler, M., Siegrist, H., (2004), Partial ozonation of acitvated sludge to reduce excess sludge, improve denitrification and control scumming and bulking, Water Science and Technology, 49(10), 41-49.
- Dytczak, M.A., Londry, K.L., Siegrist, H., Oleszkiewicz, J.A., (2007) Ozonation reduces sludge production and improves denitrification, Water Research, 41, 543-550.
- Weemaes, M., Grootaerd, H., Simoens,F., Verstraete, W., (2000), Anaerobic digestion of ozonized biosolids, Water Res., 34(8), 2330-2336.
- Paul, E., Debellefontaine, H., (2007), Reduction of excess sludge produced by biological treatment processes: effect of ozonation on biomass and on sludge, Ozone: science and Engineering, 29, 415-427.
- Mines,Jr., R.O., Northenor, C.B., Murchison, M., (2008), Oxidation and ozonation of waste activated sludge, Journal of Environmental Science and Health, 43, 610-618.
- Metcalf&Eddy, (1991), "Design of Facilities fort he Treatment and Disposal of Sludge" Ch-12 in Wastewater Engineering:Treatment, Disposal and Reuse, Ed. Tchobanoglous, G., Burton, F.L., McGraw-Hill, İnc.

## Claims

1. Aerobic sludge digestion process applicable to wastewater treatment by sequential intermittent ozone dosing; **characterized by** comprising intermittently, and not continuously, and sequentially dosing of ozone to the waste sludge for 4 or 6 minutes on each day **where sludge aerated for 24 h subsequently to each ozone dosage** for a duration of four days during aerobic digestion, where daily administered ozone dose is 0.1- 2.5 g g O₃/Kg MLSS.

## Patentansprüche

1. Aerobes Schlammfaulungsverfahren, das für die Abwasserbehandlung durch sequentielle intermittierende Ozondosierung geeignet ist, **dadurch gekennzeichnet dass,** es die intermittierende und nicht kontinuierliche und sequentielle Dosierung von Ozon zum Abwasserschlamm für 4 oder 6 Minuten an jedem Tag, **an dem der Schlamm 24 Stunden lang nach jeder Ozondosierung** für eine Dauer von vier Tagen während der aeroben Faulung belüftet wurde, an dem die täglich verabreichte Ozondosis 0.1- 2.5 g g O₃/Kg MLSS beträgt.

## Revendications

1. Procédé de digestion aérobie des boues applicable au traitement des eaux usées par dosage séquentiel intermittent d'ozone ; **caractérisé par** comprenant le dosage intermittent, et non continu, et séquentiellement, de l'ozone dans les boues résiduaires pendant 4 ou 6 minutes chaque jour, **où les boues sont aérées pendant 24 h après chaque dosage** d'ozone pendant une durée de quatre jours pendant la digestion aérobie, où la dose d'ozone administrée quotidiennement est 0.1- 2.5 g g O₃/Kg MLSS.
